# EUROPEAN PATENT APPLICATION

(11) **EP 4 629 393 A1**
(43) Date of publication of application: **08.10.2025**
(21) Application number: 23903702.1
(22) Date of filing: 12.10.2023
(51) Int. Cl.: H01M 10/0583, H01M 50/403, H01M 50/411, H01M 50/46

(54) **ELECTRODE ASSEMBLY AND ELECTRODE ASSEMBLY MANUFACTURING METHOD**

(30) Priority: 13.12.2022 KR 20220174039
(71) Applicant: LG Energy Solution, Ltd., Seoul 07335 (KR)
(72) Inventor: CHO, Woohyung, Daejeon 34122 (KR); PARK, Sungbin, Daejeon 34122 (KR); KWON, Soonho, Daejeon 34122 (KR); KIM, Mingyu, Daejeon 34122 (KR)
(74) Representative: Hoffmann Eitle
(86) International application number: PCT/KR2023/015697
(87) International publication number: WO 2024/128498

(57) **Abstract**

The present invention is intended to provide an electrode assembly and a method for manufacturing the electrode assembly.

## Description

### Technical Field

This application claims priority to and the benefit of Korean Patent Application No. 10-2022-0174039 filed in the Korean Intellectual Property Office on December 13, 2022, the entire contents of which are incorporated herein by reference.

The present invention relates to an electrode assembly and a method for manufacturing an electrode assembly.

### Background Art

Unlike a primary battery, a secondary battery can be recharged and may be formed in a small size or as a large capacity. Accordingly, a lot of research and development on secondary batteries are currently in progress. Along with the technology development and the increase in demand for mobile devices, the demand for secondary batteries as an energy source is sharply increasing.

Secondary batteries are classified into coin type batteries, cylindrical type batteries, prismatic type batteries, and pouch type batteries according to a shape of a battery case. In a secondary battery, an electrode assembly mounted inside a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack-type electrode assembly in which a plurality of positive and negative electrodes with a separator therebetween are sequentially stacked, and a stack and folding-type electrode assembly in which stack-type unit cells are wound with a separation film having a long length.

Here, in a zig zag folding-type electrode assembly, the electrode assembly is manufactured using a plurality of electrodes in a state in which the separator is folded in a zig zag form and the electrodes are positioned between the folds of the separator.

During the process, while supplying the separator to a stack table, there has been a problem that the separator is wrinkled or misaligned, causing the manufactured electrode assembly to become a defective product or deterioration in performance.

Therefore, there is a need for a process condition or method to eliminate a wrinkle or misalignment defect in a separator supplied during a manufacturing process of an electrode assembly.

### Detailed Description of the Invention

### Technical Problem

The present invention has been made in an effort to provide an electrode assembly and method for manufacturing an electrode assembly.

### Technical Solution

An exemplary embodiment of the present invention provides a method for manufacturing an electrode assembly in which a first electrode and a second electrode are alternately arranged between respective folds of a separator, the method including: supplying the first electrode to a stack table; supplying the second electrode to the stack table; supplying the separator to the stack table; and stacking a stack in a form in which the first electrode and the second electrode are alternately arranged between respective folds of the separator on the stack table, wherein the supplying the separator to the stack table includes: simultaneously coating one surface of the separator with an aqueous binder and coating the other surface of the separator with an organic-based binder; and supplying the separator whose both surfaces are coated with the different binders.

In addition, an exemplary embodiment of the present invention provides an electrode assembly in which a first electrode and a second electrode are alternately arranged between respective folds of a separator, wherein both surfaces of the separator are coated with different binders, and one surface of the separator includes an aqueous binder coating layer and the other surface of the separator includes an organic-based binder coating layer, wherein the first electrode has a surface coated with an aqueous binder, wherein the second electrode has a surface coated with an organic-based binder, wherein the aqueous binder coating layer on the separator is in contact with the first electrode, and wherein the organic-based binder coating layer on the separator is in contact with the second electrode.

### Advantageous Effects

The method for manufacturing an electrode assembly according to the exemplary embodiment of the present application can increase process efficiency.

The method for manufacturing an electrode assembly according to the exemplary embodiment of the present application can increase the adhesion between the electrode and the separator of the manufactured electrode assembly. Therefore, the electrode assembly manufactured by the method for manufacturing an electrode assembly according to the exemplary embodiment of the present application has excellent performance.

The method for manufacturing an electrode assembly according to the exemplary embodiment of the present application can provide an electrode assembly with uniform and excellent performance.

### Brief Description of Drawings

FIG. 1 is a view illustratively showing a method for manufacturing an electrode assembly according to an exemplary embodiment of the present invention.
FIG. 2 is a plan view illustratively showing an apparatus for manufacturing an electrode assembly according to an exemplary embodiment of the present invention.
FIG. 3 is a front view showing a concept of the apparatus for manufacturing an electrode assembly according to the exemplary embodiment of the present invention.
FIG. 4 is a cross-sectional view illustratively showing an electrode assembly manufactured by the apparatus for manufacturing an electrode assembly according to the exemplary embodiment of the present invention.
FIG. 5 is a perspective view illustratively showing a press unit and a state in which the press unit presses a stack in the apparatus for manufacturing an electrode assembly according to the exemplary embodiment of the present invention.
FIG. 6(a) is a perspective view showing a first press unit 50 according to an exemplary embodiment of the present invention, and FIG. 6(b) is a perspective view showing a second press unit 60 according to an exemplary embodiment of the present invention.
FIG. 7 is a perspective view showing a stack table in the apparatus for manufacturing an electrode assembly according to the exemplary embodiment of the present invention.
FIG. 8 is a perspective view showing a first electrode seating table in the apparatus for manufacturing an electrode assembly according to the exemplary embodiment of the present invention.
FIG. 9 is a perspective view showing a second electrode seating table in the apparatus for manufacturing an electrode assembly according to the exemplary embodiment of the present invention.
FIG. 10 is a perspective view showing a first suction head in the apparatus for manufacturing an electrode assembly according to the exemplary embodiment of the present invention.
FIG. 11 is a bottom view showing the first suction head in the apparatus for manufacturing an electrode assembly according to the exemplary embodiment of the present invention.
FIG. 12 is a plan view showing a holding mechanism and a stack table in the apparatus for manufacturing an electrode assembly according to the exemplary embodiment of the present invention.

### Best Mode

Hereinafter, exemplary embodiments of the present invention will be described in detail such that one skilled in the art to which the present invention belongs can readily implement the same. However, the present invention may be embodied in various different forms, and is not limited to the configurations described herein.

When one part "includes", "comprises" or "has" one constituent element in the present specification, unless otherwise specifically described, this does not mean that another constitutional element is excluded, but means that another constitutional element may be further included.

In the present specification, 'p to q' means a range of 'p or more and q or less'.

In the present specification, 'organic-based binder coating layer' or 'organic-based binder layer' refers to a layer formed by coating an organic-based binder, and 'aqueous binder coating layer' or 'aqueous binder layer' refers to a layer formed by coating an aqueous binder.

When describing the present invention, detailed descriptions of related known technologies that may unnecessarily obscure the gist of the present invention will be omitted.

An exemplary embodiment of the present invention provides a method for manufacturing an electrode assembly in which a first electrode and a second electrode are alternately arranged between respective folds of a separator, the method including: supplying the first electrode to a stack table; supplying the second electrode to the stack table; supplying the separator to the stack table; and stacking a stack in a form in which the first electrode and the second electrode are alternately arranged between respective folds of the separator on the stack table, wherein the supplying the separator to the stack table includes: simultaneously coating one surface of the separator with an aqueous binder and coating the other surface of the separator with an organic-based binder; and supplying the separator whose both surfaces are coated with the different binders.

In the present specification, the stacking form that the first electrode and the second electrode are alternately arranged between respective folds of the separator is referred to as zigzag folding.

The method for manufacturing an electrode assembly according to the present invention has the feature that the steps of coating one surface of the separator with an aqueous binder and the step of coating the other surface of the separator with an organic-based binder are performed simultaneously, and the two different types of coating are performed simultaneously, making it possible to increase process efficiency. In addition, by coating both surfaces of the separator with the aqueous binder and the organic-based binder, respectively, the adhesions between the first electrode and second electrode and the separator can be improved. With this, it is possible to provide an electrode assembly with uniform and excellent performance.

In an exemplary embodiment of the present invention, the step of simultaneously coating one surface of the separator with an aqueous binder and coating the other surface of the separator with an organic-based binder may include preparing a coating solution including the organic-based binder and the aqueous binder; phase separating the coating solution to form an interface between the organic-based binder and the aqueous binder; and simultaneously coating both surfaces of the separator while moving the separator to pass through the interface.

In an exemplary embodiment of the present invention, the coating solution may include the aqueous binder in an amount of 0.1 to 20 parts by weight based on 100 parts by weight of the coating solution, and the organic-based binder in an amount of 0.1 to 30 parts by weight based on 100 parts by weight of the coating solution.

In an exemplary embodiment of the present invention, the coating solution may include the aqueous binder in an amount of 0.1 to 20 parts by weight, preferably 0.5 to 15 parts by weight, and more preferably 1 to 12 parts by weight based on 100 parts by weight of the coating solution.

In an exemplary embodiment of the present invention, the coating solution may include the organic-based binder in an amount of 0.1 to 30 parts by weight, preferably 1 to 20 parts by weight, and more preferably 5 to 15 parts by weight based on 100 parts by weight of the coating solution.

When the content of the coating solution is satisfied, it is possible to prevent a problem of battery performance being deteriorated due to lowered ionic conductivity while improving the adhesion between the electrode and the separator.

The method for manufacturing an electrode assembly according to an embodiment of the present invention may further include drying the coating after coating one surface of the separator with the aqueous binder and coating the other surface of the separator with the organic-based binder.

In an exemplary embodiment of the present invention, the step of drying the coating may be performed at temperatures of 50°C to 70°C, and preferably 55°C to 65°C.

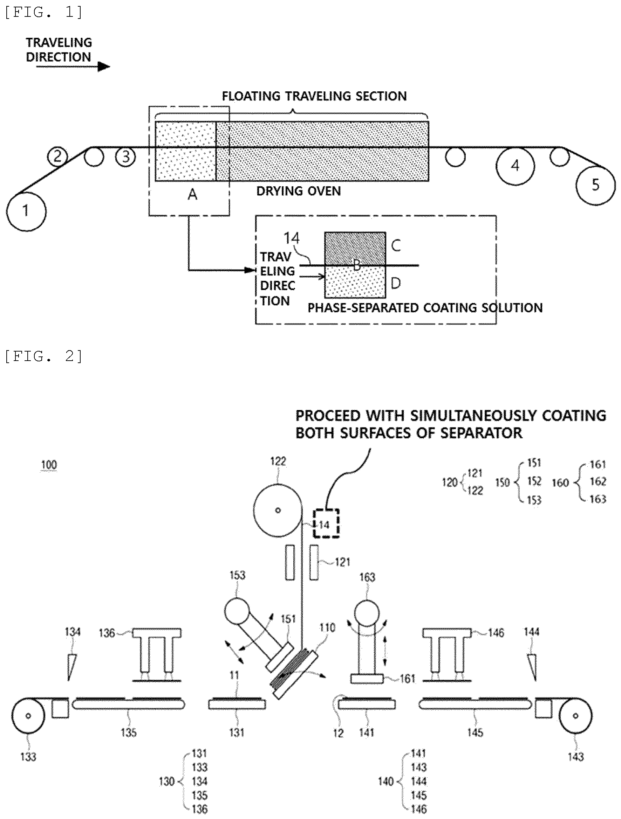

FIG. 1 schematically shows a method for manufacturing an electrode assembly according to the present invention. Referring to FIGS. 1 and 2, during a process of supplying a separator 14 from a separator supply unit 120, the separator 14 passes through a coating solution (A), as shown in FIG. 1. More specifically, the coating solution (A) includes an organic-based binder and an aqueous binder, and the organic-based binder and the aqueous binder in the coating solution (A) phase separate, so that an organic-based binder solution (C) and an aqueous binder solution (D) forms an interface (B) therebetween. In this case, the separator 14 passes through the interface (B) between the organic-based binder and the aqueous binder. In this case, a traveling section may be determined, considering a size of an electrode assembly to be manufactured, and the like, and the separator can be traveled and moved by a plurality of traveling rollers 1, 2, 3, 4, and 5.

The separator 14 that has passed through the interface (B) between the organic-based binder and the aqueous binder is dried at a predetermined temperature, so an organic-based binder layer and an aqueous binder layer are formed on both surfaces of the separator 14, respectively. Unlike the existing method, the method for manufacturing an electrode assembly according to the present invention makes it possible to coat both surfaces of the separator 14 with two different types of binders at the same time by using a method of passing through the interface (B) between the organic-based binder and the aqueous binder. Accordingly, the above-described effects can be achieved.

In an exemplary embodiment of the present invention, the aqueous binder may be one or more selected from the group consisting of an aqueous acrylic copolymer, styrene-sodium carboxymethyl cellulose (CMC), a polyacrylic acid copolymer, a polyacryl amide copolymer, styrene-butadiene rubber (SBR), a water-dispersible urethane copolymer, and a urea copolymer.

In an exemplary embodiment of the present invention, the organic-based binder may be one or more selected from the group consisting of a polyvinylidene fluoride (PVdF) copolymer, an organic-based acryl copolymer, a urethane copolymer, a polyamide copolymer, a polyimide copolymer, and a polyacrylonitrile copolymer.

The method for manufacturing an electrode assembly according to an exemplary embodiment of the present invention may further include coating one of a first electrode and a second electrode with a coating solution including the aqueous binder, and coating the other electrode with a coating solution including the organic-based binder, and one surface of the separator coated with the aqueous binder may be in contact with the coated surface of the electrode coated with the aqueous binder of the electrodes, and the other surface of the separator coated with the organic-based binder may be in contact with the coated surface of the electrode coated with the organic-based binder of the electrodes.

More specifically, in an exemplary embodiment of the present invention, the electrode coated with the aqueous binder may be a negative electrode, and the electrode coated with the organic-based binder may be a positive electrode.

That is, in order to improve the adhesion between the electrode and the separator, it is desirable to use the same type of binder as the binder coated on the positive electrode and the binder included in the coating layer formed on the surface of the separator facing the positive electrode. The same applies to the negative electrode.

Generally, the positive electrode uses an organic-based binder, and the negative electrode uses an aqueous binder. Therefore, when the positive electrode is brought into contact with the binder layer on the corresponding separator surface, the adhesion between the separator and the electrode can be further improved.

In general, an aqueous binder has excellent adhesion to a (graphite-based, silicon-based) negative electrode for which an aqueous slurry is used, and an organic-based binder has excellent adhesion to a positive electrode for which an organic-based slurry is used. Accordingly, when a separator for which an organic-based binder is used is used, the adhesion to the negative electrode decreases to widen a gap between the negative electrode and the separator, resulting in a high probability of precipitation occurring at the top of a cell.

Accordingly, by using an organic-based binder on a positive electrode adhesion surface side of the separator and an aqueous binder on a negative electrode adhesion surface side, the adhesions among the positive electrode, the separator, and negative electrode can be all improved to prevent precipitation on the cell.

In an exemplary embodiment of the present invention, the step of stacking the stack on the stack table may include stacking a separator on the stack table (S1); stacking the first electrode on an upper surface of the separator (S2); covering an upper surface of the first electrode by supplying a separator while rotating the stack table (S3); and stacking the second electrode on the separator covering the upper surface of the first electrode (S4), and the steps S1 to S4 may be repeated more than once.

In an exemplary embodiment of the present invention, the method may further include, when stacking the first electrode or the second electrode on the stack table, gripping and fixing the first electrode or the second electrode to the stack table with a holding mechanism.

The method for manufacturing an electrode assembly according to an exemplary embodiment of the present invention may further include heating and pressing the stack stacked on the stack table.

In an exemplary embodiment of the present invention, the step of heating and pressing the stack may include moving the stack between a pair of pressing blocks, moving the pair of pressing blocks toward the stack in directions facing each other, and surface-pressing the stack; and heating the stack with a press heater. Additionally, the press heater may be included in each of the pressing blocks.

In an exemplary embodiment of the present invention, the step of heating and pressing the stack may be performed under a temperature condition of 55°C or higher and 70°C or lower, a pressing condition of 1.5 MPa or higher and 3 MPa or lower and a time condition of 5 seconds or longer and 20 seconds or shorter.

Here, the pressing condition refers to a pressure applied by the pair of pressing blocks (or the pressing blocks to the stack table), and the temperature condition refers to a temperature of heat applied by the press heater.

An exemplary embodiment of the present invention provides an apparatus for manufacturing an electrode assembly by stacking a first electrode, a separator, and a second electrode, the apparatus including: a stack table on which the first electrode, the separator, and the second electrode are stacked in such a form that the first electrode and the second electrode are alternately arranged between respective folds of the separator; a separator supply unit configured to supply the separator toward the stack table side; a first electrode supply unit configured to supply the first electrode; a second electrode supply unit configured to supply the second electrode; a first electrode stack unit configured to stack the first electrode supplied from the first electrode supply unit on the stack table; a second electrode stack unit configured to stack the second electrode supplied from the second electrode supply unit on the stack table; and a press unit configured to adhere the first electrode, the separator, and the second electrode therebetween by heating and pressing a stack of the first electrode, the separator, and the second electrode stacked on the stack table.

In this case, the separator supply unit simultaneously proceeds with a process of coating one surface of both surfaces of the separator with an aqueous binder and coating the other surface of the separator with an organic-based binder, as described with respect to the method for manufacturing an electrode assembly, and then supplies the separator toward the stack table side.

In an exemplary embodiment of the present invention, the separator supply unit may include a separator dancer unit for adjusting a tension of the separator being supplied.

In an exemplary embodiment of the present invention, the apparatus may further include a holding mechanism configured to grip and fix the first electrode or the second electrode to the stack table when the first electrode or the second electrode is stacked on the stack table.

In an exemplary embodiment of the present invention, the press unit may further include a pair of pressing blocks and a press heater for heating the pressing blocks, and may be configured to move the pair of pressing blocks in directions facing each other and to surface-press the stack while heating the stacked stack.

In an exemplary embodiment of the present invention, the press heater may be included in each of the pressing blocks.

In an exemplary embodiment of the present invention, the press unit may be configured to adhere the first electrode, the separator, and the second electrode therebetween by heating and pressing the stack of the first electrode, the separator, and the second electrode under a temperature condition of 55°C or higher and 70°C or lower, a pressing condition of 1.5 MPa or higher and 3 MPa or lower and a time condition of 5 seconds or longer and 20 seconds or shorter.

Here, the pressing condition refers to a pressure applied by the pair of pressing blocks (or the pressing blocks to the stack table), and the temperature condition refers to a temperature of heat applied by the press heater.

In an exemplary embodiment of the present invention, the first electrode supply unit may include a first electrode seating table on which the first electrode is seated before being stacked on the stack table by the first electrode stack unit, and the second electrode supply unit may include a second electrode seating table on which the second electrode is seated before being stacked on the stack table by the second electrode stack unit.

In addition, in an exemplary embodiment of the present invention, the first electrode stack unit may include a first suction head for vacuum-suctioning the first electrode seated on the first electrode seating table, and the second electrode stack unit may include a second suction head for vacuum-suctioning the second electrode seated on the second electrode seating table.

In an exemplary embodiment of the present invention, the apparatus may further include a rotation unit configured to rotate the stack table, the first electrode stack unit may be provided on one side of the rotation unit and the second electrode stack unit may be provided on the other side of the rotation unit for enabling zigzag folding in such a manner that the separator is positioned between the first electrode and the second electrode, and the rotation unit may be configured to alternately proceed with rotating the stack table toward one side so as to face the first suction head of the first electrode stack unit when stacking the first electrode and rotating the stack table toward the other side so as to face the second suction head of the second electrode stack unit when stacking the second electrode.

An exemplary embodiment of the present invention provides an electrode assembly in which a first electrode and a second electrode are alternately arranged between respective folds of a separator, wherein both surfaces of the separator are coated with different binders, and one surface of the separator includes an aqueous binder coating layer and the other surface of the separator includes an organic-based binder coating layer, wherein the first electrode has a surface coated with an aqueous binder, wherein the second electrode has a surface coated with an organic-based binder, wherein the aqueous binder coating layer on the separator is in contact with the first electrode, and wherein the organic-based binder coating layer on the separator is in contact with the second electrode.

That is, in the present specification, the description of the apparatus for manufacturing an electrode assembly may be applied to the method for manufacturing an electrode assembly and an electrode assembly, and vice versa.

Hereinafter, the apparatus for manufacturing an electrode assembly and the method for manufacturing an electrode assembly of the present invention will be described in more detail with reference to FIGS. 1 to 12.

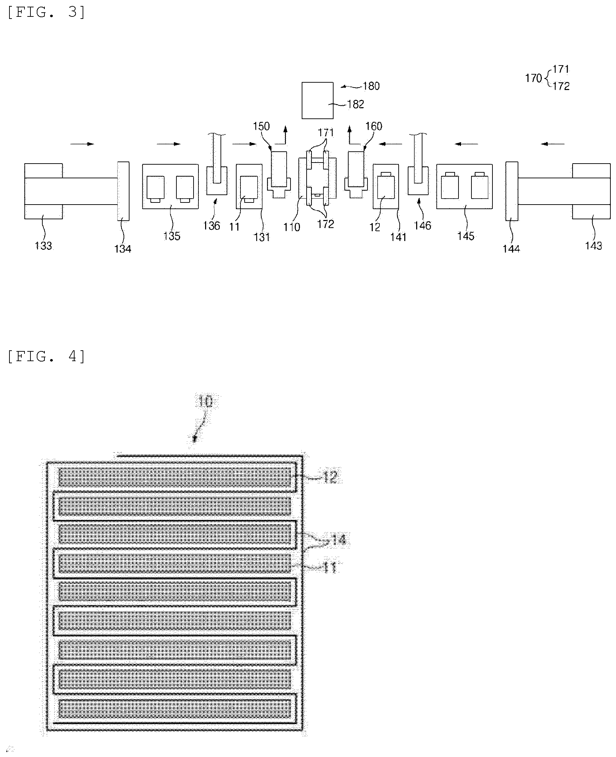

FIG. 2 is a plan view illustratively showing an apparatus for manufacturing an electrode assembly according to an exemplary embodiment of the present invention, and FIG. 3 is a front view showing a concept of the apparatus for manufacturing an electrode assembly according to the exemplary embodiment of the present invention. Here, for convenience, in FIG. 2, a holding mechanism 170 and a press unit 180 shown in FIG. 3 are omitted, and in FIG. 3, a separator supply unit 120 shown in FIG. 2 is omitted.

In the present specification, the "holding mechanism" serves to grip a stack stacked on the stack table in order to stack a first electrode or a second electrode during a process of manufacturing a stack in which the first electrode, the separator, and the second electrode are stacked in such a form that the first electrode and the second electrode are alternately arranged between respective folds of the separator folded on the stack table, and has a different function from a gripper that grips the stack during a process of heating and pressing.

Referring to FIGS. 1 to 3, an apparatus 100 for manufacturing an electrode assembly according to an exemplary embodiment of the present invention includes a stack table 110, a separator supply unit 120 that supplies a separator 14, a first electrode supply unit 130 that supplies a first electrode 11, a second electrode supply unit 140 that supplies a second electrode 12, a first electrode stack unit 150 that stacks the first electrode 11 on the stack table 110, a second electrode stack unit 160 that stacks the second electrode 12 on the stack table 110, and a press unit 180 that adheres the first electrode 11, the separator 14, and the second electrode 12 therebetween. In addition, the apparatus 100 for manufacturing an electrode assembly according to an exemplary embodiment of the present invention may further include a holding mechanism 170 for fixing the first electrode 11 and the second electrode 12 when the electrodes are stacked on the stack table 110. In this case, the aforementioned description of FIG. 1 may be applied to the separator supplied from the separator supply u nit.

In addition, in an exemplary embodiment of the present invention, the first electrode, the separator, and the second electrode may be supplied to the stack table while being heated.

That is, the separator supply unit may supply the separator to the stack table while heating the separator, and the first electrode supply unit and the second electrode supply unit may supply the first electrode and the second electrode to the stack table while heating the first electrode and the second electrode, respectively.

FIG. 4 is a cross-sectional view illustratively showing an electrode assembly manufactured by the apparatus or method for manufacturing an electrode assembly according to the exemplary embodiment of the present invention. In this case, an organic-based binder layer and an aqueous binder layer are formed on both surfaces of the separator, respectively, and the above description may be applied to the electrodes in contact with the layers.

Referring to FIGS. 1 to 4, the apparatus 100 for manufacturing an electrode assembly according to an exemplary embodiment of the present invention is an apparatus that stacks the first electrode 11, the separator 14, and the second electrode 12 to manufacture an electrode assembly 10.

As shown in FIG. 4, the electrode assembly 10 is generally a chargeable/dischargeable power generating element, and may be formed in such a shape that the first electrode 11, the separator 14, and the second electrode 12 are alternately stacked and assembled. Here, the electrode assembly 10 may have such a form that the separator 14 is folded in a zigzag shape, for example, and the first electrode 11 and the second electrode 12 are alternately arranged between the folds of the separator 14. In this case, the electrode assembly 10 may be provided in such a form that the separator 14 surrounds the outermost of the electrode assembly. As described above, the organic-based binder layer and the aqueous binder layer are formed on both surfaces of the separator 14, respectively.

In addition, as shown in FIG. 2, the separator supply unit 120 may further include a separator roll 122 on which the separator 14 is wound. The separator wound on the separator roll may be gradually unwound and supplied to the stack table. That is, the separator may be in the form of a separator sheet. In this case, the separator 14 supplied by a separator heating unit 121 can be heated, and can be supplied while the tension of the separator being adjusted by the dancer unit (not shown) described above.

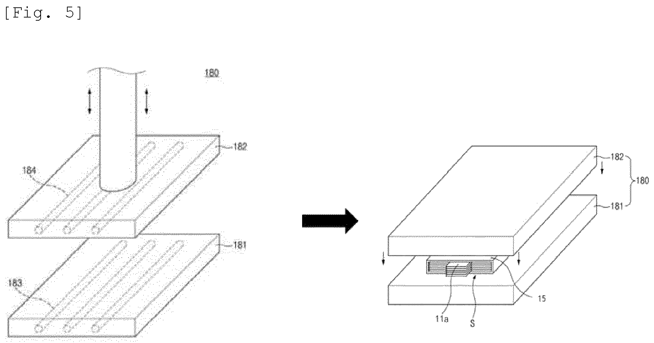

Referring to FIG. 5, the press unit 180 may further include a pair of pressing blocks 181 and 182 and press heaters 183 and 184 included in the pair of pressing blocks 181 and 182. In this case, the pair of pressing blocks 181 and 182 may move in directions facing each other to surface press the stack S, which may be heated by the press heaters 183 and 184. The aforementioned description may be applied to heading and pressing conditions.

In addition, in an exemplary embodiment of the present application, the press unit may be divided into a first press unit and a second press unit. The first press unit may be defined as one that heats and presses the stack while gripping the stack by a gripper, and the second press unit may be defined as one that is used when secondarily heating and pressing the stack, which has been primarily heated and pressed by the first press unit, without the gripping by the gripper. In this case, the aforementioned description of the press unit may be applied to the heating and pressing conditions of the first press unit and the second press unit.

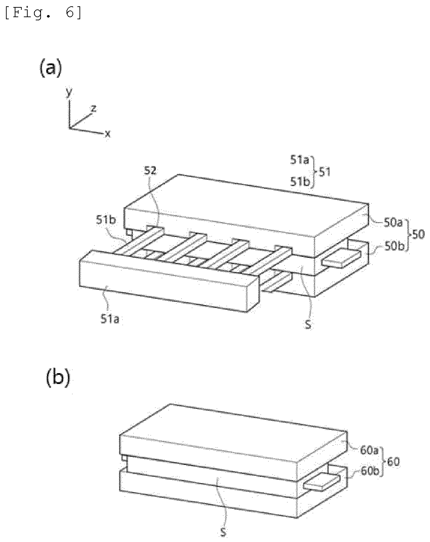

Regarding this, FIG. 6(a) is a perspective view showing a first press unit 50 according to an exemplary embodiment of the present invention, and FIG. 6(b) is a perspective view showing a second press unit 60 according to an exemplary embodiment of the present invention.

Referring to FIG. 6(a), the first press unit 50 may heat and press the stack S while the stack S is fixed by a gripper 51. The first press unit 50 includes a pair of first pressing blocks 50a and 50b, and the pair of first pressing blocks 50a and 50b has planar pressing surfaces for pressing, except for a groove corresponding to a fixing portion 51b of the gripper 51.

The gripper 51 may include a main body 51a having dimensions corresponding to a length (x) and a height (y) of the stack S or greater than the length (x) and height (y) of the stack S, and a plurality of fixing portions 51b each provided on one surface of the main body 51a in the form of a pillar or a plate extending along a width (z) direction of the stack S. Here, the length (x) of the stack S may refer to a portion of the stack with the longest distance from one end to the other end of the stack S, the height (y) may refer to a distance in a stacking direction of the stack S, and the width (z) may refer to a distance horizontally crossing an upper surface of the stack S.

The fixing portions 51b can be position-adjusted along the height direction of the main body 51a, so that the fixing portions 51b can fix the stack S while being in contact with upper and lower surfaces of the stack S. Then, the pair of first pressing blocks 50a and 50b of the first press unit 50 are moved in directions facing each other to surface-press one or more of the stack S and the gripper 51, making it possible to adhere the electrodes and the separator included in the stack S.

Referring to FIG. 6(b), the second press unit 60 may finally heat and press the stack S that has been primarily heated and pressed by the first press unit 50. The second press unit 60 includes a pair of second pressing blocks 60a and 60b, and the pair of second pressing blocks 60a and 60b can surface-press the stack S while moving in directions facing each other. In addition, the pair of second pressing blocks 60a and 60b of the second press unit 60 may have pressing surfaces for pressing in contact with the stack S, which are all planar surfaces.

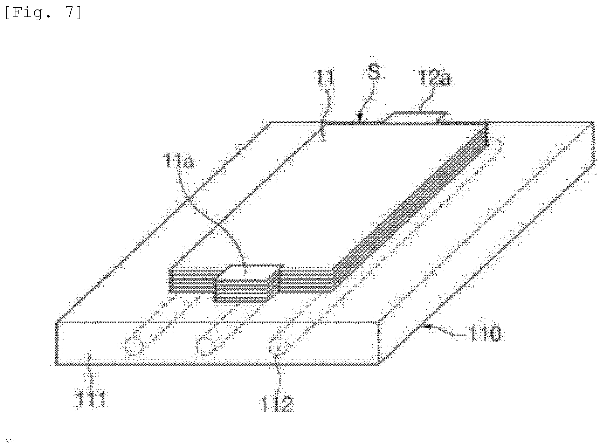

FIG. 7 is a perspective view showing a stack table in the apparatus for manufacturing an electrode assembly according to the exemplary embodiment of the present invention.

Referring to FIGS. 3 and 7, the first electrode 11, the separator 14 and the second electrode 12 may be stacked on the stack table 110 in the form of the first electrode 11 and the second electrode 12 being alternately arranged between respective folds of the separator 14.

In addition, the stack table 110 may include a table body 111 on which the first electrode 11, the separator 14, and the second electrode 12 are stacked and a stack table heater 112 that heats the stacked stack S by heating the table body 111.

The first electrode 11 may be configured as a positive electrode, and the second electrode 12 may be configured as a negative electrode, but the present invention is not necessarily limited thereto. For example, the first electrode 11 may be configured as a negative electrode, and the second electrode 12 may be configured as a positive electrode.

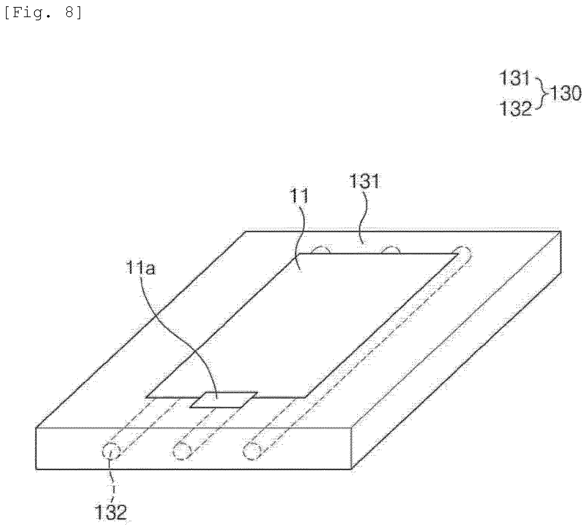

FIG. 8 is a perspective view showing a first electrode seating table in the apparatus for manufacturing an electrode assembly according to the exemplary embodiment of the present invention.

Referring to FIGS. 3 and 8, the first electrode supply unit 130 may supply the first electrode 11 to the first electrode stack unit 150 while heating the first electrode 11.

In addition, the first electrode supply unit 130 may include a first electrode seating table 131 on which the first electrode 11 is seated before being stacked on the stack table 110 by the first electrode stack unit 150 and a first electrode heater 132 that heats the first electrode 11 by heating the first electrode seating table 131.

Note that the first electrode supply unit 130 may further include a first electrode roll 133 on which the first electrode 11 is wound in the form of a sheet, a first cutter 134 that cuts the first electrode 11 at regular intervals to form first electrodes 11 with a predetermined size when the first electrode 11 in the form of a sheet wound on the first electrode roll 133 is unwound and supplied, a first conveyor belt 135 that moves the first electrodes 11 cut by the first cutter 134, and a first electrode supply head 136 that vacuum-suctions the first electrodes 11 being conveyed by the first conveyor belt 135 to seat the same on the first electrode seating table 131. Here, the first cutter 134 may cut the sheet-like first electrode 11 so that a first electrode tab 11a is formed to protrude at an end portion.

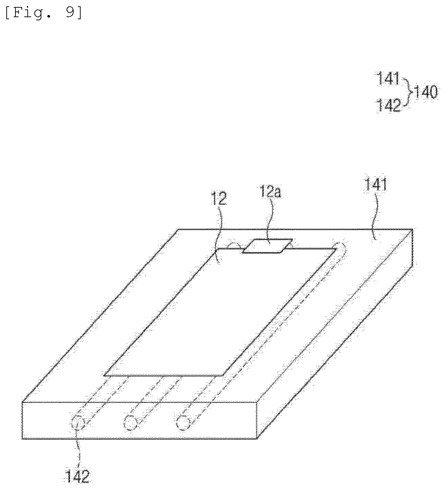

FIG. 9 is a perspective view showing a second electrode seating table in the apparatus for manufacturing an electrode assembly according to the exemplary embodiment of the present invention.

Referring to FIGS. 3 and 9, the second electrode supply unit 140 may supply the second electrode 12 to the second electrode stack unit 160 while heating the second electrode 12.

In addition, the second electrode supply unit 140 may include a second electrode seating table 141 on which the second electrode 12 is seated before being stacked on the stack table 110 by the second electrode stack unit 160 and a second electrode heater 142 that heats the second electrode 12 by heating the second electrode seating table 141.

Note that the second electrode supply unit 140 may further include a second electrode roll 143 on which the second electrode 12 is wound in the form of a sheet, a second cutter 144 that cuts the second electrode 12 at regular intervals to form second electrodes 12 with a predetermined size when the second electrode 12 in the form of a sheet wound on the second electrode roll 143 is unwound and supplied, a second conveyor belt 145 that moves the second electrodes 12 cut by the second cutter 144, and a second electrode supply head 146 that vacuum-suctions the second electrodes 12 being conveyed by the second conveyor belt 145 to seat the same on the second electrode seating table 141. Here, the second cutter 144 may cut the sheet-like second electrode 12 so that a second electrode tab 12a is formed to protrude at an end portion.

In an exemplary embodiment of the present invention, the first electrode stack unit may include a first suction head for vacuum-suctioning the first electrode seated on the first electrode seating table, and the second electrode stack unit may include a second suction head for vacuum-suctioning the second electrode seated on the second electrode seating table.

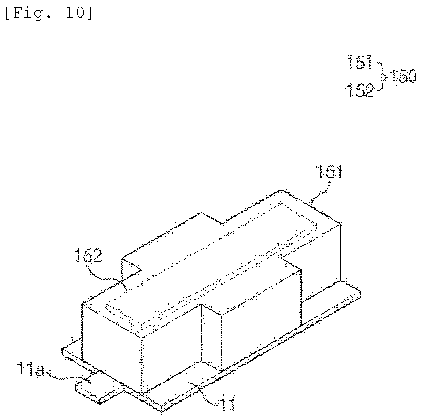

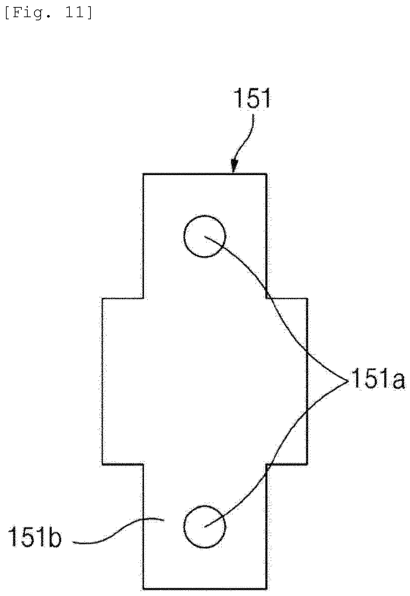

FIG. 10 is a perspective view showing a first suction head in the apparatus for manufacturing an electrode assembly according to the exemplary embodiment of the present invention, and FIG. 11 is a bottom view showing the first suction head in the apparatus for manufacturing an electrode assembly according to the exemplary embodiment of the present invention.

Referring to FIGS. 2, 3, 10, and 11, the first electrode stack unit 150 may stack the first electrode 11 on the stack table 110.

In addition, the first electrode stack unit 150 may include a first suction head 151 and a first moving part 153.

The first suction head 151 can vacuum-suction the first electrode 11 seated on the first electrode seating table 131. In this case, the first suction head 151 has a vacuum suction hole 151a formed on a bottom surface 151b, and can suction the first electrode 11 through the vacuum suction hole 151a to fix the first electrode 11 to the bottom surface 151b of the first suction head 151. Here, the first suction head 151 may be formed therein with a passage connecting the vacuum suction hole 151a and a vacuum suction device (not shown).

The first moving part 153 can move the first suction head 151 to the stack table 110 so that the first suction head 151 can stack the first electrode 11 seated on the first electrode seating table 131 on the stack table 110. In addition, the second electrode stack unit 160 can stack the second electrode 12 on the stack table 110. Here, the second electrode stack unit 160 may have the same structure as the first electrode stack unit 150 described above. In this case, the second electrode stack unit 160 may include a second suction head 161 and a second moving part 163.

The second suction head 161 can vacuum-suction the second electrode 12 seated on the second electrode seating table 141.

The second moving part 163 can move the second suction head 161 to the stack table 110 so that the second suction head 161 can stack the second electrode 12 seated on the second electrode seating table 141 on the stack table 110.

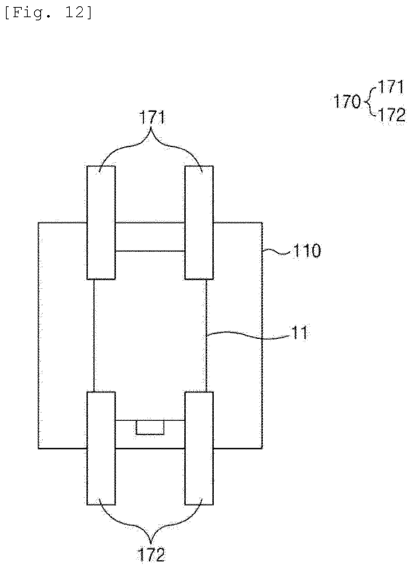

FIG. 12 is a plan view showing a holding mechanism and a stack table in the apparatus for manufacturing an electrode assembly according to the exemplary embodiment of the present invention.

Referring to FIGS. 3 and 12, when the first electrode 11 or the second electrode 12 is stacked on the stack table 110, a holding mechanism 170 can fix the first electrode 11 or the second electrode 12 to the stack table 110 while gripping the first electrode 11 or the second electrode 12.

In addition, the holding mechanism 170 can press and fix an upper surface of the first electrode 11 stacked on the uppermost side on the stack table 110 when stacking the first electrodes 11 on the stack table 110, and can press and fix an upper surface of the second electrode 12 stacked on the uppermost side on the stack table 110 when stacking the second electrodes 12 on the stack table 110. Furthermore, the holding mechanism can press and fix an upper surface of a stack of the first electrode 11, the separator 14, and the second electrode 12 stacked on the stack table 110.

That is, when forming the stack while positioning and stacking the first electrode 11 and the second electrode 12 between the folds of the separator 14, the holding mechanism 170 grips the uppermost surface of the stack in a manner of pressing the same toward the stack table 110, making it possible to prevent the stack from being separated from the stack table 110.

Note that the holding mechanism 170 may include, for example, a first holding mechanism 171 and a second holding mechanism 172, and can fix both sides of the first electrode 11 or the second electrode 12.

Then, when the holding mechanism 170 grips the first electrode 11 or the second electrode 12 and rotates the stack table 110, the separator 14 can be unwound from the separator roll 122 and supplied to the stack table 110 side.

In addition, the stacking of the first electrode and the second electrode in the form of being alternately arranged between the respective folds of the separator may also be performed by moving the stack table or the separator right and left. In this case, after the holding mechanism 170 grips the first electrode 11 or the second electrode 12, the stack table 110 or the separator 14 moves right and left, causing the separator 14 to be unwound from the separator roll 122 and supplied to the stack table 110 side. Note that, for example, the stack table 110 may be moved right and left with being connected to or combined with a stack table moving part (not shown), and the separator may be supplied to the stack table while moving right and left by a separator guide part (not shown).

In an exemplary embodiment of the present invention, the first electrode may be a positive electrode, and the second electrode may be a negative electrode.

In an exemplary embodiment of the present invention, the first electrode may be a negative electrode, and the second electrode may be a positive electrode.

In addition, in an exemplary embodiment of the present invention, the positive electrode is manufactured by, for example, applying a mixture of a positive electrode active material, a conductive material, and a binder on a positive electrode current collector and then drying the same, and if necessary, a filler is added to the mixture. For the materials used in this case, materials that are commonly used in the field may be used.

Specifically, examples of the positive electrode active material may include a layered compound such as lithium cobalt oxide (LiCoO₂) and lithium nickel oxide (LiNiO₂), or a compound substituted with one or more transition metals; a lithium manganese oxide such as chemical formula Li₁₊ₓMn₂₋ₓO₄ (where x is 0 to 0.33), LiMnO₃, LiMn₂O₃ and LiMnO₂; a lithium copper oxide (Li₂CuO₂); a vanadium oxide such as LiV₃O₈, LiFe₃O₄, V₂O₅ and CU₂V₂O₇; a Ni-site type lithium nickel oxide represented by chemical formula LiNi₁₋ₓMₓO₂ (where M is Co, Mn, Al, Cu, Fe, Mg, B or Ga, and x is 0.01 to 0.3); a lithium manganese composite oxide represented by chemical formula LiMn₂₋ₓMₓO₂ (where M is Co, Ni, Fe, Cr, Zn or Ta, and x is 0.01 to 0.1) or Li₂Mn₃MO₈ (where M is Fe, Co, Ni, Cu or Zn); LiMn₂O₄ in which a part of Li of the chemical formula is substituted with an alkaline earth metal ion; a disulfide compound; and Fe₂(MoO₄)₃, but are not limited thereto.

Specifically, the positive electrode current collector is not particularly limited as long as it has high conductivity without causing a chemical change in the battery. For example, stainless steel, aluminum, nickel, titanium, fired carbon, aluminum or stainless steel each surface-treated with carbon, nickel, titanium, silver, or the like, or the like may be used. Specifically, aluminum may be used. The positive electrode current collector may have microscopic irregularities formed on a surface to enhance an adhesive force of the positive electrode active material, and may be used in various forms such as a film, a sheet, a foil, a net, a porous body, a foamed body, or a non-woven fabric body. In addition, the positive electrode current collector may generally have a thickness ranging from 3 µm to 500 µm.

The conductive material may typically be added in an amount of 1 to 50 wt% based on a total weight of the mixture including the positive electrode active material. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The binder is a component that assists in the bonding of the active material, the conductive material, and the like and the bonding to the current collector, and is usually added in an amount of 1 to 50 wt% based on the total weight of the mixture including the positive electrode active material. Examples of such a binder may include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluorine rubber, various copolymers, and the like.

The filler is selectively used as a component to suppress expansion of the positive electrode, and is not particularly limited as long as it is a fibrous material that does not cause chemical changes in the battery. For example, an olefin-based polymer such as polyethylene and polypropylene; and a fibrous material such as glass fiber and carbon fiber may be used.

In addition, in an exemplary embodiment of the present invention, the negative electrode is manufactured by applying, drying and pressing the negative electrode active material on a negative electrode current collector, and if necessary, a conductive material, a binder, a filler, and the like as described above may be optionally further included. Also in this case, materials that are commonly used in the art may be used.

Specifically, as the negative electrode active material, for example, carbon such as non-graphitizable carbon and graphite-based carbon; metal composite oxides such as LixFe₂O₃ (0≤x≤1), LiₓWO₂ (0≤x≤1), and SnₓMe₁₋ₓMe' yOz (Me: Mn, Fe, Pb, Ge; Me': Al, B, P, Si, elements of Groups 1, 2 and 3 of the periodic table, and halogens; 0<x≤1; 1≤y≤3; 1≤z≤8); lithium metal; a lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; a conductive polymer such as polyacetylene; a Li-Co-Ni based material, and the like may be used.

Such a negative electrode current collector is not particularly limited as long as it has conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, like the positive electrode current collector, the negative electrode current collector may have microscopic irregularities formed on a surface to enhance a bonding force of the negative electrode active material, and may be used in various forms such as a film, a sheet, a foil, a net, a porous body, a foamed body, or a non-woven fabric body. In additionally, the negative electrode current collector may generally have a thickness ranging from 3 µm to 500 µm.

In an exemplary embodiment of the present invention, the separator may be an organic/inorganic composite porous SRS (Safety-Reinforcing Separator). The SRS may have a structure in which a coating layer component including inorganic particles and a binder polymer is applied on a polyolefin-based separator substrate.

Since the SRS does not undergo high-temperature thermal contraction due to the heat resistance of the inorganic particles, even if the electrode assembly is penetrated by a needle-like conductor, an elongated length of the safety separator can be maintained.

The SRS may have a uniform pore structure formed by an interstitial volume between the inorganic particles that are a component of the coating layer, in addition to the pore structure included in the separator substrate itself. The pores may not only significantly alleviate any external impacts applied to the electrode assembly, but may also facilitate the migration of lithium ions through the pores, as well as enable a large amount of electrolyte solution to be impregnated into the separator, thereby promoting improved performance of the battery.

In an exemplary embodiment of the present invention, examples of the polyolefin-based separator substrate component may include high-density polyethylene, linear low-density polyethylene, low-density polyethylene, ultrahigh molecular weight polyethylene, polypropylene, derivatives thereof, or the like.

In an exemplary embodiment of the present invention, the separator has separator surplus portions extending on both sides beyond widths of the positive electrode and the negative electrode based on a width direction, and has a structure in which a coating layer thicker than a thickness of the separator is formed on one surface or both surfaces of both sides of the separator surplus portions in order to prevent shrinkage of the separator.

In an exemplary embodiment of the present invention, the separator surplus portions may each have a size of 5% to 12% of the width of the separator.

In an exemplary embodiment of the present invention, the coating layer may be coated on both surfaces of the separator over a size of 50% to 90% of the width of the separator surplus portion on one side. In addition, the widths of the coating layers on both surfaces may be the same as or different from each other.

In an exemplary embodiment of the present invention, the thickness of the coating layer may be smaller than the thickness of the first electrode or second electrode. In a specific example, the thickness of the coating layer may be 30% to 99% of the thickness of the first electrode or the second electrode.

In an exemplary embodiment of the present invention, the coating layer may be formed by wet coating or dry coating.

In an exemplary embodiment of the present invention, the coating layer may be referred to as an active layer.

In an exemplary embodiment of the present invention, the polyolefin-based separator substrate and the coating layer may exist in a form in which pores on the surface of the substrate and the coating layer are anchored with each other, whereby the separator substrate and the active layer may be bonded physically firmly. In this case, the substrate and the active layer may have a thickness ratio from 9:1 to 1:9 and, specifically 5:5, considering the physical bonding force and the pore structure existing on the separator.

In an exemplary embodiment of the present invention, the coating layer may include inorganic particles and a binder polymer.

In an exemplary embodiment of the present invention, the inorganic particle may be inorganic particles that are commonly used in the art. The inorganic particles serve to form fine pores by enabling formation of empty spaces between the inorganic particles, and also serve as a kind of spacer that can maintain the physical shape. In addition, since the inorganic particles generally have properties that do not change their physical properties even at high temperatures of 200°C or higher, the resultant organic/inorganic composite porous film has excellent heat resistance.

Additionally, the inorganic particles are not particularly limited as long as they are electrochemically stable. That is, the inorganic particles that can be used in the present invention are not particularly limited as long as they do not undergo oxidation and/or reduction reactions in an operating voltage range of a battery to which they are applied (for example, 0 to 5 V based on Li/Li+). In particular, the use of inorganic particles having ion transport ability may promote improved performance by increasing the ionic conductivity in the electrochemical device. Thus, use of inorganic particles having ionic conductivity as high as possible is preferable. In addition, when the inorganic particles have a high density, it is difficult to disperse the inorganic particles during coating, and there is also a problem of weight increase during battery manufacturing. Therefore, use of inorganic particles having density as low as possible is preferable. In addition, inorganic materials having high permittivity contribute to an increase in the degree of dissociation of electrolyte salt, such as a lithium salt, in a liquid electrolyte, thereby improving the ionic conductivity of the electrolyte solution.

For the above-described reasons, the inorganic particles may be one or more types selected from the group consisting of inorganic particles having piezoelectricity and inorganic particles having lithium-ion transport ability.

The inorganic particles having piezoelectricity refer to a material that is a nonconductor at normal pressure, but has a physical property of conducting electricity due to a change in an internal structure when a certain pressure is applied. The inorganic particles having piezoelectricity are also a material that exhibits a high-permittivity characteristics with a permittivity constant of 100 or more. The inorganic particles having piezoelectricity are also a material that generate an electric potential difference between opposite surfaces by causing one surface to be positively charged and the other surface to be negatively charged due to charges generated when they are subjected to tension or compression by a certain pressure applied.

When the inorganic particles having the above-described characteristics are used as a coating layer component, in the case of an internal short circuit of the negative electrode and the positive electrode due to an external impact, such as by a needle-like conductor, the positive electrode and the negative electrode may not directly contact each other due to the inorganic particles coated on the separator. Moreover, due to the piezoelectricity of the inorganic particles, an electric potential difference may occur in the particles, whereby electron movement, i.e., the flow of a minute current, may occur between the negative electrode and the positive electrode, leading to a gentle reduction in the voltage of the battery and, thus, an improvement in safety.

Examples of materials for the inorganic particles having piezoelectricity may be one or more types selected from the group consisting of BaTiO₃, Pb(Zr,Ti)O₃ (PZT), Pb₁₋ₓLaₓZr_{1-y}Ti_{y}O₃ (PLZT), PB(Mg₃Nb_{2/3}) O₃-PbTiO₃ (PMN-PT) and hafnia (HfO₂), but are not limited thereto.

The inorganic particles having lithium-ion transport ability refer to inorganic particles containing a lithium element but not storing lithium and instead having a function of migrating lithium ions. The inorganic particles having lithium-ion transport ability can transport and migrate lithium ions due to a kind of defect in a particle structure. As a result, the lithium ionic conductivity in the battery may be improved, thereby improving battery performance.

Examples of materials for the inorganic particles having lithium-ion transport ability may be one or more types selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), glass of ((LiAlTiP)ₓO_{y}, 0<x<4, 0<y<13) series, lithium lanthanum titanate (LiₓLa_{y}TiO₃, 0<x<2, 0<y<3), lithium germanium thiophosphate (LiₓGe_{y}P₂S_{w}, 0<x<4, 0<y<1, 0<z<1, 0<w<5), lithium nitride (LiₓN_{y}, 0<x<4, 0<y<2), glass of SiS₂(LiₓSi_{y}S_{z}, 0<x<3, 0<y<2, 0<z<4) series, and glass of P₂S₅ (LiₓP_{y}S_{z}, 0<x<3, 0<y<3, 0<z<7) series, but are not limited thereto.

A composition ratio of the inorganic particles and the binder polymer, which are components of the coating layer, is not particularly limited, but may be adjusted within a range from 10:90 to 99:1 by weight%, and is preferably within a range from 80:20 to 99:1 by weight%. If the composition ratio is less than 10:90 by weight%, the content of the polymer becomes excessively large, so the pore size and porosity may be reduced due to a decrease in the empty space formed between the inorganic particles, finally resulting in deterioration in the battery performance. On the other hand, if the composition ratio exceeds 99:1 by weight%, the content of the polymer is too small, so the mechanical properties of the final organic/inorganic composite porous separator may be deteriorated due to weakened adhesive force between the inorganic materials.

The coating layer of the organic/inorganic composite porous separator may further include other commonly known additives, in addition to the above-described inorganic particles and binder polymer.

In an exemplary embodiment of the present invention, the coating layer may be referred to as an active layer.

### Mode for Invention

Although the present invention has been described in detail with reference to the specific examples, this is intended to specifically describe the present invention, and the apparatus for manufacturing an electrode assembly according to the present invention is not limited thereto. It is apparent that various implementations are possible by one skilled in the art within the technical spirit of the present invention.

### <Preparation of Electrode Assembly>

### 1) Example 1

After an interface was formed between an organic-based binder solution and an aqueous binder solution in a coating solution including an organic-based binder and an aqueous binder, the separator was traveled to pass through the interface. After passing through the interface, the separator was dried to form an organic-based binder layer and an aqueous binder layer on respective surfaces of the separator. At the same time, the separator with the organic-based binder layer and the aqueous binder layer formed on the respective surfaces thereof was supplied to the stack table. In addition, 19 positive electrode sheets and 20 negative electrode sheets were also supplied to the stack table.

While supplying the positive electrodes, the negative electrodes, and the separator to the stack table, the separator was folded, and the positive electrodes, the negative electrodes, and separator were stacked. Specifically, a stack using the 39 electrode sheets was prepared by stacking the positive electrodes, the negative electrodes, and the separator on the stack table in the form of the positive electrode and the negative electrode being alternately arranged between the respective folds of the separator. Then, an electrode assembly of Example 1 was prepared by heating and pressing the stack for 15 seconds (time condition) under a temperature condition of 60°C and a pressing condition of 2 MPa.

### 2) Comparative Example 1

A separator was traveled to pass through a coating solution including only an aqueous binder. After passing through the coating solution, the separator was dried to form aqueous binder layers on both surfaces of the separator. At the same time, the separator with the aqueous binder layers formed on both surfaces thereof was supplied to the stack table. In addition, 19 positive electrode sheets and 20 negative electrode sheets were also supplied to the stack table. An electrode assembly of Comparative Example 1 was prepared in the same manner as Example 1, except for the above.

### 3) Comparative Example 2

A separator was traveled to pass through a coating solution including only an organic-based binder. After passing through the coating solution, the separator was dried to form organic-based binder layers on both surfaces of the separator. At the same time, the separator with the organic-based binder layers formed on both surfaces thereof was supplied to the stack table. In addition, 19 positive electrode sheets and 20 negative electrode sheets were also supplied to the stack table. An electrode assembly of Comparative Example 2 was prepared in the same manner as Example 1, except for the above.

### <Experimental Example - Adhesive Force Measurement>

In the electrode assemblies of Example 1 and Comparative Examples 1 and 2, positive electrode and separator samples and negative electrode and separator samples positioned in the same order were prepared. Specifically, the sample can be sampled with a width of 20 mm and a length of 20 mm. After attaching each of the samples to an adhesive tape, the separator of the sample was pulled from the adhesive tape in the vertical direction. In this case, the value at the time when the separator was peeled off from the electrode was measured and defined as an adhesive force. For reference, a packaging OPP tape (box tape) was used as the adhesive tape.

**[Table 1]**

| | Adhesive force between negative electrode and separator (unit: gf/20 mm) | Adhesive force between positive electrode and separator (unit: gf/20 mm) |
|---|---|---|
| Example 1 (aqueous/organic-based composite) | 42.4 | 58.8 |
| Comparative Example 1 (aqueous binders on both surfaces) | 38.7 | 22.3 |
| Comparative Example 2 (organic-based binders on both surfaces) | 20.8 | 61.2 |

From the results in Table 1, it could be confirmed that in Example 1, the adhesive forces between the negative electrode and the separator and between the positive electrode and the separator were high and uniform. It could be confirmed that in Comparative Example 1, the adhesive forces between the negative electrode and the separator and between the positive electrode and the separator were uniform but low, and in Comparative Example 2, the adhesive force between the positive electrode and the separator was high but the adhesive force between the negative electrode and the separator was low, and the adhesive forces between the negative electrode and the separator and between the positive electrode and the separator were not uniform.

That is, it could be confirmed that when a separator having an organic-based binder layer and an aqueous binder layer formed on the respective surfaces of the separator is used as in Example 1, an electrode assembly with high adhesive force and uniform performance can be manufactured.

In addition, it could be confirmed that Example 1 also has excellent process efficiency because it is possible to proceed with coating one surface of the separator with an aqueous binder and coating the other surface of the separator with an organic-based binder at the same time by using the method of separating the interface of the aqueous binder and the organic-based binder in the coating solution and passing the separator through the interface.

### [Description of Reference Numerals and Symbols]

1, 2, 3, 4, 5: traveling roller
10: electrode assembly
11: first electrode
11a: first electrode tab
12: second electrode
12a: second electrode tab
14: separator
50: first press unit
50a, 50b: pair of first pressing blocks
51: gripper
51a: main body
51b: fixing portion
60: second press unit
60a, 60b: pair of second pressing blocks
100, 200: apparatus for manufacturing electrode assembly
110: stack table
111: table body
112: stack table heater
120: separator supply unit
121: separator heating unit
122: separator roll
130: first electrode supply unit
131: first electrode seating table
132: first electrode heater
133: first electrode roll
134: first cutter
135: first conveyor belt
136: first electrode supply head
140: second electrode supply unit
141: second electrode seating table
142: second electrode heater
143: second electrode roll
144: second cutter
145: second conveyor belt
146: second electrode supply head
150: first electrode stack unit
151: first suction head
151a: vacuum suction hole
151b: bottom surface
152: first head heater
153: first moving part
160: second electrode stack unit
161: second suction head
162: second head heater
163: second moving part
170: holding mechanism
171: first holding mechanism
172: second holding mechanism
180: press unit
181: first pressing block
182: second pressing block
183, 184: press heater
S: stack
A: coating solution
B: interface
C: organic-based binder solution
D: aqueous binder solution

## Claims

1. A method for manufacturing an electrode assembly in which a first electrode and a second electrode are alternately arranged between respective folds of a separator, the method comprising:
supplying the first electrode to a stack table;
supplying the second electrode to the stack table;
supplying the separator to the stack table; and
stacking a stack in a form in which the first electrode and the second electrode are alternately arranged between respective folds of the separator on the stack table,
wherein the supplying the separator to the stack table comprises:
simultaneously coating one surface of the separator with an aqueous binder and coating the other surface of the separator with an organic-based binder, and
supplying the separator whose both surfaces are coated with the different binders.

2. The method of claim 1, wherein the coating one surface of the separator with an aqueous binder and the other surface of the separator with an organic-based binder at the same time comprises:
preparing a coating solution comprising the organic-based binder and the aqueous binder,
phase separating the coating solution to form an interface between the organic-based binder and the aqueous binder, and
simultaneously coating both surfaces of the separator while moving the separator to pass through the interface.

3. The method of claim 1, wherein the aqueous binder is one or more selected from the group consisting of an aqueous acrylic copolymer, styrene-sodium carboxymethyl cellulose (CMC), a polyacrylic acid copolymer, a polyacryl amide copolymer, styrene-butadiene rubber (SBR), a water-dispersible urethane copolymer, and a urea copolymer.

4. The method of claim 1, wherein the organic-based binder is one or more selected from the group consisting of a polyvinylidene fluoride (PVDF) copolymer, an organic-based acryl copolymer, a urethane copolymer, a polyamide copolymer, a polyimide copolymer, and a polyacrylonitrile copolymer.

5. The method of claim 1, further comprising coating one of the first electrode and the second electrode with a coating solution comprising the aqueous binder, and coating the other electrode with a coating solution comprising the organic-based binder,
wherein one surface of the separator coated with the aqueous binder is in contact with the coated surface of the electrode coated with the aqueous binder of the electrodes, and
wherein the other surface of the separator coated with the organic-based binder is in contact with the coated surface of the electrode coated with the organic-based binder of the electrodes.

6. The method of claim 5, wherein the electrode coated with the aqueous binder is a negative electrode, and
wherein the electrode coated with the organic-based binder is a positive electrode.

7. An electrode assembly in which a first electrode and a second electrode are alternately arranged between respective folds of a separator,
wherein both surfaces of the separator are coated with different binders,
wherein one surface of the separator comprises an aqueous binder coating layer,
wherein the other surface of the separator comprises an organic-based binder coating layer,
wherein the first electrode has a surface coated with an aqueous binder,
wherein the second electrode has a surface coated with an organic-based binder,
wherein the aqueous binder coating layer on the separator is in contact with the first electrode, and
wherein the organic-based binder coating layer on the separator is in contact with the second electrode.
